# EUROPÄISCHE PATENTSCHRIFT

(11) **EP 4 014 422 B1**
(45) Veröffentlichungstag und Bekanntmachung des Hinweises auf die Patenterteilung: **31.12.2025**
(21) Anmeldenummer: 20758189.3
(22) Anmeldetag: 19.08.2020
(51) Int. Cl.: H04L 7/00, H02M 7/00, H02J 3/00

(54) **VERFAHREN UND VORRICHTUNG ZUM SYNCHRONISIEREN VON DEZENTRALEN STEUERVORRICHTUNGEN**
METHOD AND DEVICE FOR SYNCHRONIZATION OF DISTRIBUTED CONTROL DEVICES
PROCEDE ET DISPOSITIF DE SYNCHONRISATION DES DISPOSITIVES DISTRIBUÉS DE CONTROLE

(30) Priorität: 23.08.2019 DE 102019122682
(43) Veröffentlichungstag der Anmeldung: 22.06.2022
(73) Patentinhaber: Liebherr-Electronics and Drives GmbH, 88131 Lindau (DE)
(72) Erfinder: ENGST, Christian, 89614 Öpfingen (DE); RESCH, Jürgen, 88458 Degernau (DE); RUF, Stefan, 88416 Ochsenhausen (DE)
(74) Vertreter: Lorenz Seidler Gossel Part. mbB
(86) Internationale Anmeldenummer: PCT/EP2020/073157
(87) Internationale Veröffentlichungsnummer: WO 2021/037620

(56) Entgegenhaltungen:
- WO-A1-02/097959
- US-A1- 2011 267 854
- US-A1- 2015 076 903
- US-B1- 7 764 129
- US-B2- 9 252 786

## Beschreibung

Die vorliegende Erfindung betrifft ein Verfahren sowie ein Steuerungssystem zum Synchronisieren von dezentralen Steuervorrichtungen, die jeweils nach einem eigenen, internen Regeltakt getaktete Steuersignale generieren und abgeben, sowie ein System mit solchen dezentralen Steuervorrichtungen.

Beim Parallelbetrieb von mehreren dezentralen Steuervorrichtungen oder Regelkreisen ist es unter bestimmten Voraussetzungen notwendig oder zumindest sinnvoll, die einzelnen Regelkreise oder Steuervorrichtungen miteinander zu synchronisieren, um negative Auswirkungen von nicht synchronisierten Steuervorrichtungen oder Regelkreisen zu reduzieren. Werden dezentrale Steuervorrichtungen nicht synchronisiert, sodass die Steuervorrichtungen ihre Steuersignale nur nach ihrem eigenen Regeltakt generieren und abgeben, kann es beispielsweise beim Betreiben von Frequenzumrichtern zu erhöhten Ausgleichsströmen, magnetischer Kopplung, erhöhten Verlustleistungen oder erhöhten Lärmemissionen kommen.

Solche dezentralen Steuervorrichtungen werden beispielsweise in Frequenzumrichtersystemen eingesetzt, die für diverse Industrieanwendungen eingesetzt und beispielsweise in einem Schaltschrank verbaut sein können. Solche Frequenzumrichtersysteme oder andere leistungselektronische Systeme mit Leistungsschaltern, Filterdrosseln, Filtern und Bremswiderständen oder anderen leistungselektronischen Bauteilen, können in Leistungsbereichen von mehreren 100 kW bis in den Megawattbereich hinein arbeiten und beispielsweise der Steuerung von Stellantrieben oder anderen Anlagen wie beispielsweise Fertigungs- und Produktionsanlagen, Hebezeugen wie Hubwerken oder Aufzügen, Raffinerieanlagen, Zementfertigungsgeräten oder in der Wasseraufbereitung eingesetzt werden.

Derartige dezentrale Steuervorrichtungen werden beispielsweise in Frequenzumrichtersystemen eingesetzt, die unter dem Produktnamen Liduro LCU von der Anmelderin vertrieben werden.

Aus US 2011 / 267854 A1 ist ein Verfahren zur Synchronisation einer Ausgangswechselspannung eines Stromrichters auf eine externe Wechselspannung bekannt. Insbesondere wird die Speisung einer Last mit einer Netzspannung eines Stromversorgungsnetzes oder den Ausgangsspannungen einer Mehrzahl von Wechselrichtern offenbart.

In der Druckschrift WO 02 / 097959 A1 wird die Synchronisation mehrerer Leistungwandler in einem Dual-Ring-Netzwerk beschrieben, wobei die Leistungwandler aufgrund ihrer dualen Ringanordnung in Serie geschaltet sind.

Die Druckschrift US 2015/076903 A1 (KANAYAMA FUMIAKI [JP] ET AL) 19. März 2015 (2015-03-19) offenbart die Oberbegriffe der unabhängigen Ansprüche.

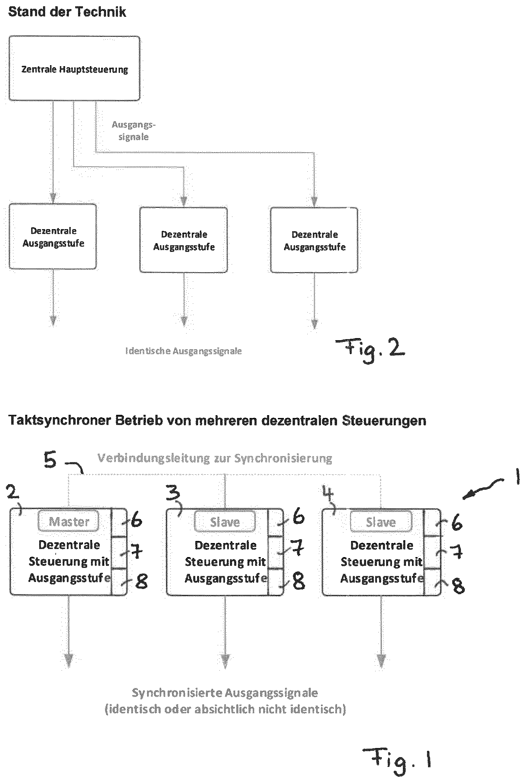

Um die genannten negativen Auswirkungen nicht synchronisierter Steuervorrichtungen zu vermeiden, wird in der Regel eine zentrale Hauptsteuerung verwendet, die die Ausgangssignale generiert. Wie Figur 2 zeigt, können von der zentralen Hauptsteuerung Ausgangssignale an verschiedene dezentrale Regler bzw. Ausgangsstufen über Leitungen verteilt werden. Die dezentralen Ausgangsstufen bzw. Steuervorrichtungen erzeugen dabei keine eigenen Steuersignale nach einem eigenen internen Regeltakt, sondern verwenden die Signale, die von der zentralen Hauptsteuerung kommen. Faktisch sind somit die Reglerausgänge der Hauptsteuerung und der dezentralen Steuervorrichtungen miteinander identisch.

Durch eine solche Synchronisation können Störungen durch nicht-synchronisierte Steuersignale wie beispielsweise erhöhte Ausgleichsströme und Verlustleistungen, Probleme durch magnetische Kopplung oder erhöhte Lärmemissionen vermieden werden. Allerdings ist es andererseits nicht mehr möglich, einzelne Steuervorrichtungen und die daran angebundenen Anlagenkomponenten bewusst mit einer gewünschten Phasenverschiebung anzusteuern bzw. mit einem eigenen Regeltakt zu betreiben. Zudem kommt es bei einem erhöhten Datenaufkommen auf dem Datenbus zu größeren Anforderungen an die Rechenleistung der zentralen Hauptsteuerung, wobei gleichzeitig Verzögerungen bei der Steuerungsgeschwindigkeit eintreten können.

Der vorliegenden Erfindung liegt daher die Aufgabe zugrunde, ein verbessertes Verfahren und ein verbessertes Steuerungssystem der eingangs genannten Art zu schaffen, die Nachteile des Standes der Technik vermeiden und letzteren in vorteilhafter Weise weiterbilden. Insbesondere sollen die Nachteile nicht-synchronisierter dezentraler Steuervorrichtungen wie erhöhte Ausgleichsströme, Verlustleistungen und Lärmemissionen vermieden werden, ohne dies durch Unflexibilität und Reaktionszeit- und Leistungseinbußen bei der Komponentensteuerung zu erkaufen.

Erfindungsgemäß wird die genannte Aufgabe durch ein Verfahren gemäß Anspruch 1 oder Anspruch 2, sowie ein Steuerungssystem gemäß Anspruch 6 oder Anspruch 7 gelöst. Bevorzugte Ausgestaltungen der Erfindung sind Gegenstand der abhängigen Ansprüche.

Es wird also vorgeschlagen, die dezentrale Steuerungsarchitektur sowie die dezentrale Steuersignalerzeugung mit jeweils eigenem Regeltakt beizubehalten, dabei jedoch die Regeltakte der verschiedenen Steuervorrichtungen aneinander anzupassen. Die Anpassung und/oder Verschiebung der internen Regeltakte der dezentralen Steuervorrichtungen kann dabei von den dezentralen Steuervorrichtungen selbst vorgenommen werden. Erfindungsgemäß wird von einer Steuervorrichtung ein Synchronisationstakt an die anderen Steuervorrichtungen bereitgestellt, wobei von den anderen Steuervorrichtungen, die den Synchronisationstakt empfangen, jeweils eine Taktdifferenz zwischen den bereitgestellten Synchronisationstakt und dem eigenen, internen Regeltakt bestimmt und in Abhängigkeit der bestimmten Taktdifferenz der eigene, interne Regeltakt beschleunigt und/oder verlangsamt wird, um hierdurch den jeweils eigenen, internen Regeltakt an den externen Synchronisationstakt anzupassen.

Durch das Bereitstellen eines Synchronisationstakts und das Bestimmen der Taktdifferenz zwischen dem eigenen Regeltakt und dem bereitgestellten Synchronisationstakt können die dezentralen Steuervorrichtungen miteinander synchronisiert werden, wobei aber immer noch jede Steuervorrichtung ihr eigenes Steuersignal erzeugen und dessen Takt und/oder Pulsweite festlegen kann. Damit können einerseits die genannten Nachteile unsynchronisierter Steuervorrichtungen vermieden, gleichzeitig aber die Vorteile einer dezentralen Steuersignalgenerierung beibehalten werden.

In Weiterbildung der Erfindung können die Steuervorrichtungen ihren eigenen, internen Regeltakt derart beschleunigen und/oder verlangsamen, dass die gemessene oder bestimmte Taktdifferenz zum extern vorgegebenen Synchronisationstakt möglichst gegen Null geht und/oder eine möglichst vollständige Synchronisierung der Steuersignale erzielt wird.

Erfindungsgemäß sieht zumindest eine der Steuervorrichtungen oder auch eine Untergruppe der Steuervorrichtungen gemeinsam gegenüber dem extern vorgegebenen Synchronisationstakt eine bewusste, vorbestimmte Verschiebung des eigenen Regeltakts vor. Die jeweiligen Steuervorrichtungen können dabei in der genannten Weise den eigenen, internen Regeltakt verzögern oder beschleunigen, damit die gemessene oder anderweitig bestimmte Taktdifferenz zu dem extern vorgegebenen Synchronisationstakt einen vorbestimmten Wert einnimmt.

Die genannte Beschleunigung oder Verzögerung des internen Regeltakts in Abhängigkeit der bestimmten Taktdifferenz kann in Weiterbildung der Erfindung in einem zeitlich begrenzten Zeitfenster vorgenommen werden, insbesondere in einem Zeitfenster unmittelbar nach dem Starten der Steuervorrichtungen.

In Weiterbildung der Erfindung kann das Anpassen der Regeltakte, insbesondere das genannte Beschleunigen und/oder Verzögern aber auch mehrfach in wiederkehrenden Zyklen bzw. nacheinander folgenden Zeitfenstern oder auch kontinuierlich vorgenommen werden, um eine dauerhafte Synchronisierung der Steuerausgänge zu erzielen. Vorteilhafterweise können die Steuervorrichtungen den kontinuierlich bereitgestellten, externen Synchronisationstakt kontinuierlich oder zyklisch mit dem jeweils eigenen internen Regeltakt abgleichen, um die Taktdifferenz kontinuierlich oder zyklisch zu bestimmen. Ergibt sich eine Abweichung im Regeltakt, die ein vorbestimmtes Maß übersteigt, kann die jeweilige Steuervorrichtung den Regeltakt wieder verzögern oder beschleunigen, um die Taktdifferenz zu korrigieren bzw. die Abweichung möglichst zu beseitigen.

Die dezentralen Steuervorrichtungen sind durch eine Verbindungsleitung zur Synchronisierung miteinander verbunden, wobei die Verbindungsleitung ein Bussystem umfasst oder eine feste Verdrahtung aufweist oder auch eine drahtlose Kommunikationsverbindung besitzen kann. Über die genannte Synchronisationsverbindung wird der bereitgestellte Synchronisationstakt an alle beteiligten Steuervorrichtungen übermittelt, sodass die den Synchronisationstakt empfangenden Steuervorrichtungen ihren eigenen Regeltakt anpassen können.

Der genannte Synchronisationstakt wird von einer der dezentralen Steuervorrichtungen selbst vorgegeben, die in diesem Fall als Master-Steuervorrichtung fungiert, während die den von der Master-Steuervorrichtung bereitgestellten Synchronisationstakt empfangenden Steuervorrichtungen Slave-Steuervorrichtungen bilden.

Die Funktionalität der Steuervorrichtungen wird durch Parametrierung festgelegt. Die entsprechend parametrierbar ausgebildeten Steuervorrichtungen übernehmen jeweils durch entsprechende Parametrierung die Funktion einer Master-Steuervorrichtung oder die Funktion einer Slave-Steuervorrichtung. Hierdurch ist eine Redundanz der dezentralen Steuervorrichtungen gewährleistet. Fällt eine Master-Steuervorrichtung aus, wird durch eine automatische Erkennung des Ausfalls eine Slave-Steuervorrichtung zu einer Master-Steuervorrichtung konfiguriert.

Beispielsweise können die dezentralen Steuervorrichtungen eine implementierte Erkennungsfunktionalität aufweisen, die das Ausbleiben des Empfangs eines zentralen Synchronisationstakts erkennt, woraufhin eine der das Ausbleiben erkennenden dezentralen Steuervorrichtungen die Funktionalität der Master-Steuervorrichtung übernehmen und das zentrale Synchronisationssignal bereitstellen kann.

Vorteilhafterweise können die Steuervorrichtungen mit einer vorbestimmten Priorität versehen sein, gemäß der nur ein dezentraler Regelkreis bzw. nur eine dezentrale Steuervorrichtung die Funktionalität des Masters übernimmt und den Synchronisationstakt bereitstellt.

Die Erfindung wird nachfolgend anhand eines bevorzugten Ausführungsbeispiels und einer zugehörigen Zeichnung näher erläutert. In der Zeichnung zeigt:
- Fig. 1:: eine schematische Darstellung eines Systems mit mehreren dezentralen Steuervorrichtungen mit einer Vorrichtung zum Synchronisieren der Steuervorrichtungen nach einer vorteilhaften Ausführung der Erfindung, und
- Fig. 2:: ein System mehrerer dezentraler Steuervorrichtungen, die gemäß dem Stand der Technik durch eine zentrale Hauptsteuerung synchronisiert werden.

Wie Figur 1 zeigt, umfasst das Steuerungssystem 1 mehrere dezentrale Steuervorrichtungen 2, 3, 4, die jeweils eine Ausgangsstufe umfassen können, über die ein Steuerungs- und/oder Regelsignal abgegeben werden kann.

Die genannten Steuerungsvorrichtungen 2, 3, 4 können jeweils verschiedene Steuerungsbausteine, insbesondere auch Leistungssteuerungsbausteine für die Steuerung eines Frequenzumrichters oder eines anderen leistungselektronischen Bauteils aufweisen. Beispielsweise können die Steuerungsvorrichtungen 2, 3, 4 einen Mikro-Controller mit einem Programmspeicher, in dem ein Steuerungsprogramm abgelegt sein kann, aber auch verschiedene andere Steuerungsbausteine wie Halbleiterbausteine, Induktivitäten, Widerstände, Schaltverstärker, Taster sowie Stromsteller und/oder -richter umfassen.

Die genannten Steuervorrichtungen 2, 3 und 4 sind vorteilhafterweise parametrierbar ausgebildet, sodass durch Parametrierung eine der Steuervorrichtungen 2 zur Master-Steuervorrichtung konfiguriert werden kann, die einen Synchronisationstakt vorgeben kann, der an die anderen Steuervorrichtungen 3 und 4 bereitgestellt wird.

Wie Figur 1 zeigt, können die Steuervorrichtungen 2, 3 und 4 durch eine Verbindungsleitung 5 zur Synchronisierung miteinander verbunden sein, über welche Verbindungsleitung 5 das Signal des Synchronisationstakts von der Master-Steuervorrichtung 2 an die anderen Steuervorrichtungen 3 und 4 bereitgestellt wird. Die empfangenden Steuervorrichtungen 3 und 4 können über die genannte Parametrierung zu Slave-Steuervorrichtungen konfiguriert sein, welche ihren eigenen, internen Regeltakt an den empfangenen Synchronisationstakt anpassen.

Die Steuervorrichtungen 2, 3 und 4 können jeweils eine Taktdifferenz-Bestimmungseinrichtung 6 aufweisen, die jeweils die Taktdifferenz zwischen dem empfangenen Synchronisationstakt und dem eigenen, internen Regeltakt, der von einer Regeltakteinrichtung 7 vorgegeben wird, bestimmt.

**In** den Steuervorrichtungen 2, 3 und 4 ist vorteilhafterweise weiterhin eine Taktsteuervorrichtung 8 implementiert, beispielsweise in Form einer Software-Funktion, mittels derer die Regeltakteinrichtung 7 gesteuert und der hiervon vorgegebene, interne Regeltakt beschleunigt und verzögert und/oder verschoben werden kann, um eine Anpassung an den extern vorgegebenen Synchronisationstakt zu erzielen.

Je nach bestimmter Taktdifferenz steuert die Taktsteuervorrichtung 8 die Regeltakteinrichtung 7 so an, dass diese kurzzeitig ihren Regeltakt erhöht oder reduziert, bis die gewünschte Anpassung an den empfangenen Synchronisationstakt erreicht ist. Vorteilhafterweise erfolgt die genannte kurzzeitige Erhöhung bzw. Reduzierung des Regeltakts unmittelbar nach dem Start der Steuervorrichtungen 2, 3 und 4. Danach kann die Synchronisierung überwacht und der jeweilige interne Regeltakt permanent angepasst werden, sodass eine dauerhafte Synchronisierung bzw. Anpassung der Regler bzw. Steuerungsausgänge gewährleistet ist.

Je nach Steuerungsaufgabe kann eine Slave-Steuervorrichtung oder auch mehrere Slave-Steuervorrichtungen 3, 4 den eigenen internen Regeltakt aber auch bewusst gegenüber dem vorbestimmten Synchronisationstakt verschieben. **In** analoger Weise kann die Taktdifferenzbestimmungseinrichtung 6 die Taktdifferenz zum empfangenen Synchronisationstakt messen bzw. bestimmen, woraufhin die Taktsteuervorrichtung 8 den Regeltakt der Regeltakteinrichtung 7 beschleunigen oder verzögern kann, bis die gewünschte Taktverschiebung erreicht ist.

## Patentansprüche

1. Verfahren zum Synchronisieren von Steuervorrichtungen (2, 3, 4), von denen jeweils nach einem eigenen, internen Regeltakt getaktete Steuersignale generiert und abgegeben werden, wobei die Steuervorrichtungen (2, 3, 4) durch eine Verbindungsleitung (5) zum Übertragen eines Synchronisationstaktsignals miteinander verbunden sind, wobei wahlweise eine der Steuervorrichtungen (2) durch Parametrierung zu einer Master-Steuervorrichtung bestimmt wird, von der der Synchronisationstakt an die anderen Steuervorrichtungen (3, 4) bereitgestellt wird, wobei die anderen Steuervorrichtungen (3, 4) durch Parametrierung zu Slave-Steuervorrichtungen bestimmt werden, wobei bei Ausbleiben des Synchronisationstakts eine der vormals als Slave-Steuervorrichtung fungierenden Steuervorrichtungen zur Master-Steuervorrichtung bestimmt wird, von der der Synchronisationstakt vorgegeben wird, wobei von den anderen durch Parametrierung zu Slave-Steuervorrichtung bestimmten Steuervorrichtungen (3, 4), von denen der genannte Synchronisationstakt empfangen wird, eine Taktdifferenz zwischen dem bereitgestellten Synchronisationstakt und dem eigenen, internen Regeltakt bestimmt und in Abhängigkeit der bestimmten Taktdifferenz der eigene, interne Regeltakt beschleunigt und/oder verlangsamt wird, wodurch der genannte eigene, interne Regeltakt an den bereitgestellten Synchronisationstakt angepasst wird; **dadurch gekennzeichnet, dass** der jeweils eigene, interne Regeltakt von zumindest einer der durch Parametrierung zu Slave-Steuervorrichtung bestimmten Steuervorrichtungen (3, 4) weiterhin durch eine in der genannten zumindest einen Steuervorrichtung (3, 4) implementierte Taktsteuervorrichtung (8) derart beschleunigt und/oder verlangsamt wird, dass die bestimmte Taktdifferenz zum empfangenen Synchronisationstakt einen bewussten vorbestimmten Wert ungleich null annimmt.

2. Verfahren zum Synchronisieren von Steuervorrichtungen (2, 3, 4), von denen jeweils nach einem eigenen, internen Regeltakt getaktete Steuersignale generiert und abgegeben werden, wobei die Steuervorrichtungen (2, 3, 4) durch eine Verbindungsleitung (5) zum Übertragen eines Synchronisationstaktsignals miteinander verbunden sind, wobei wahlweise eine der Steuervorrichtungen (2) durch Parametrierung zu einer Master-Steuervorrichtung bestimmt wird, von der der Synchronisationstakt an die anderen Steuervorrichtungen (3, 4) bereitgestellt wird, wobei die anderen Steuervorrichtungen (3, 4) durch Parametrierung zu Slave-Steuervorrichtungen bestimmt werden, wobei bei Ausbleiben des Synchronisationstakts eine der vormals als Slave-Steuervorrichtung fungierenden Steuervorrichtungen zur Master-Steuervorrichtung bestimmt wird, von der der Synchronisationstakt vorgegeben wird, wobei von den anderen durch Parametrierung zu Slave-Steuervorrichtung bestimmten Steuervorrichtungen (3, 4), von denen der genannte Synchronisationstakt empfangen wird, eine Taktdifferenz zwischen dem bereitgestellten Synchronisationstakt und dem eigenen, internen Regeltakt bestimmt und in Abhängigkeit der bestimmten Taktdifferenz der eigene, interne Regeltakt beschleunigt und/oder verlangsamt wird, wodurch der genannte eigene, interne Regeltakt an den bereitgestellten Synchronisationstakt angepasst wird; **dadurch gekennzeichnet, dass** der jeweils eigene, interne Regeltakt von zumindest einer der durch Parametrierung zu Slave-Steuervorrichtung bestimmten Steuervorrichtungen (3, 4) weiterhin durch eine in der genannten zumindest einen Steuervorrichtung (3, 4) implementierte Taktsteuervorrichtung (8) derart beschleunigt und/oder verlangsamt wird, dass der eigene interne Regeltakt der genannten zumindest einen Steuervorrichtung (3, 4) zum empfangenen Synchronisationstakt eine bewusste vorbestimmte Verschiebung annimmt.

3. Verfahren nach einem der beiden vorhergehenden Ansprüche, wobei der jeweils eigene, interne Regeltakt von zumindest einer Steuervorrichtung (3, 4) durch eine in der genannten Steuervorrichtung (3, 4) implementierte Taktsteuervorrichtung (8) derart beschleunigt und/oder verlangsamt wird, dass die bestimmte Taktdifferenz zum empfangenen Synchronisationstakt gegen Null geht.

4. Verfahren nach einem der vorhergehenden Ansprüche, wobei die Bestimmung der Taktdifferenz und die genannte Beschleunigung und/oder Verlangsamung des Regeltakts in zumindest einem Zeitfenster unmittelbar nach Starten der Steuervorrichtungen (2, 3, 4) vorgenommen wird.

5. Verfahren nach einem der vorhergehenden Ansprüche, wobei die genannte Bestimmung der Taktdifferenz und die genannte Beschleunigung und/oder Verlangsamung des eigenen, internen Regeltakts von den Steuervorrichtungen (3, 4) mehrfach zyklisch oder kontinuierlich vorgenommen wird.

6. Steuerungssystem mit mehreren Steuervorrichtungen (2, 3, 4), die jeweils nach einem eigenen, internen Regeltakt getaktete Steuersignale generieren und abgeben, wobei die Steuervorrichtungen (2, 3, 4) parametrierbar ausgebildet und durch eine Verbindungsleitung (5) miteinander verbunden sind, wobei eine der Steuervorrichtungen (2) durch Parametrierung dazu konfiguriert ist, als Master-Steuervorrichtung zu fungieren und einen Synchronisationstakt an die anderen Steuervorrichtungen (3, 4) bereitzustellen, wobei die anderen Steuervorrichtungen (3, 4) durch Parametrierung dazu konfiguriert sind, als Slave-Steuervorrichtungen zu fungieren, wobei bei Ausbleiben des Synchronisationstakts eine der vormals als Slave-Steuervorrichtung fungierenden Steuervorrichtungen dazu konfiguriert ist, als Master-Steuervorrichtung zu fungieren und den Synchronisationstakt bereitzustellen, wobei zumindest an den anderen, den Synchronisationstakt empfangenen Steuervorrichtungen (3, 4) eine Taktdifferenz-Bestimmungseinrichtung (6) zum Bestimmen einer Taktdifferenz zwischen dem empfangenen Synchronisationstakt und dem eigenen, internen Regeltakt sowie eine Taktsteuervorrichtung (8) zum Beschleunigen und/oder Verlangsamen des eigenen, internen Regeltakts in Abhängigkeit der bestimmten Taktdifferenz und Anpassen des eigenen, internen Regeltakts an den empfangenen Synchronisationstakt vorgesehen sind; **dadurch gekennzeichnet, dass** die Taktsteuervorrichtung (8) zumindest einer durch Parametrierung zu Slave-Steuervorrichtung bestimmten Steuervorrichtung (3, 4) dazu ausgebildet ist, den eigenen, internen Regeltakt der Steuervorrichtung (3, 4) derart zu beschleunigen und/oder zu verlangsamen, dass die bestimmte Taktdifferenz einen bewussten vorbestimmten Wert ungleich 0 annimmt.

7. Steuerungssystem mit mehreren Steuervorrichtungen (2, 3, 4), die jeweils nach einem eigenen, internen Regeltakt getaktete Steuersignale generieren und abgeben, wobei die Steuervorrichtungen (2, 3, 4) parametrierbar ausgebildet und durch eine Verbindungsleitung (5) miteinander verbunden sind, wobei eine der Steuervorrichtungen (2) durch Parametrierung dazu konfiguriert ist, als Master-Steuervorrichtung zu fungieren und einen Synchronisationstakt an die anderen Steuervorrichtungen (3, 4) bereitzustellen, wobei die anderen Steuervorrichtungen (3, 4) durch Parametrierung dazu konfiguriert sind, als Slave-Steuervorrichtungen zu fungieren, wobei bei Ausbleiben des Synchronisationstakts eine der vormals als Slave-Steuervorrichtung fungierenden Steuervorrichtungen dazu konfiguriert ist, als Master-Steuervorrichtung zu fungieren und den Synchronisationstakt bereitzustellen, wobei zumindest an den anderen, den Synchronisationstakt empfangenen Steuervorrichtungen (3, 4) eine Taktdifferenz-Bestimmungseinrichtung (6) zum Bestimmen einer Taktdifferenz zwischen dem empfangenen Synchronisationstakt und dem eigenen, internen Regeltakt sowie eine Taktsteuervorrichtung (8) zum Beschleunigen und/oder Verlangsamen des eigenen, internen Regeltakts in Abhängigkeit der bestimmten Taktdifferenz und Anpassen des eigenen, internen Regeltakts an den empfangenen Synchronisationstakt vorgesehen sind; **dadurch gekennzeichnet, dass** die Taktsteuervorrichtung (8) zumindest einer durch Parametrierung zu Slave-Steuervorrichtung bestimmten Steuervorrichtung (3, 4) dazu ausgebildet ist, den eigenen, internen Regeltakt der Steuervorrichtung (3, 4) derart zu beschleunigen und/oder zu verlangsamen, dass der eigene interne Regeltakt der genannten zumindest einen Steuervorrichtung (3, 4) zum empfangenen Synchronisationstakt eine bewusste vorbestimmte Verschiebung annimmt.

8. Steuerungssystem mit mehreren Steuervorrichtungen nach einem der beiden vorhergehenden Ansprüche, wobei die Steuervorrichtungen (2, 3, 4) eine Bestimmungseinrichtung zum Bestimmen des Ausbleibens des Synchronisationstakt-Signals sowie ein Umkonfigurierungs-Modul zum Umkonfigurieren einer Slave-Steuervorrichtung in die Master-Steuervorrichtung bei Ausbleiben des Synchronisationstaktsignals aufweisen.

9. Steuerungssystem mit mehreren Steuervorrichtungen nach einem der Ansprüche 6 bis 8, wobei die Taktsteuervorrichtung (8) zumindest einer Steuervorrichtung (3, 4) dazu ausgebildet ist, den eigenen, internen Regeltakt der Steuervorrichtung (3, 4) derart zu beschleunigen und/oder zu verlangsamen, dass die bestimmte Taktdifferenz **Null** wird oder gegen **Null** geht.

10. Steuerungssystem mit mehreren Steuervorrichtungen nach einem der Ansprüche 6 bis 9, wobei die Taktdifferenz-Bestimmungseinrichtung (6) und die Taktsteuervorrichtung (8) zumindest einer Steuervorrichtung (3, 4) dazu ausgebildet sind, die Bestimmung der Taktdifferenz zum Synchronisationstakt und die Beschleunigung und/oder Verlangsamung des eigenen, internen Regeltakts in zumindest einem Zeitfenster unmittelbar nach Starten der Steuervorrichtung (3, 4), vorzugsweise zyklisch mehrfach oder kontinuierlich vorzunehmen.

## Claims

1. Method for synchronising control devices (2, 3, 4), by which clocked control signals are generated and output, in each case following an individual, internal control clock pulse, wherein the control devices (2, 3, 4) are interconnected by a connection line (5) for transmitting a synchronisation clock pulse signal, wherein selectively one of the control devices (2) is determined, by parameterisation, as a master control device, which provides the synchronisation clock pulse to the other control devices (3, 4), wherein the other control devices (3, 4) are determined, by parameterisation, as slave control devices, wherein if the synchronisation clock pulse is absent one of the control devices previously functioning as a slave control device is determined as the master control device, which specifies the synchronisation clock pulse, wherein the other control devices (3, 4), determined by parameterisation as a slave control device, which receive the mentioned synchronisation clock pulse, determine a clock pulse difference between the provided synchronisation clock pulse and the individual, internal control clock pulse and accelerate and/or slow the individual, internal control clock pulse depending on the determined clock pulse difference, as a result of which the mentioned individual, internal control clock pulse is adjusted to the provided synchronisation clock pulse, **characterised in that** the respective individual, internal control clock pulse of at least one of the control devices (3, 4) determined by parameterisation as a slave control device is furthermore accelerated and/or slowed by a clock pulse control device (8) implemented in the mentioned at least one control device (3, 4) in such a way that the determined clock pulse difference from the received synchronisation clock pulse assumes an intentional predetermined value that is different from zero.

2. Method for synchronising control devices (2, 3, 4), by which clocked control signals are generated and output, in each case following an individual, internal control clock pulse, wherein the control devices (2, 3, 4) are interconnected by a connection line (5) for transmitting a synchronisation clock pulse signal, wherein selectively one of the control devices (2) is determined, by parameterisation, as a master control device, which provides the synchronisation clock pulse to the other control devices (3, 4), wherein the other control devices (3, 4) are determined, by parameterisation, as slave control devices, wherein if the synchronisation clock pulse is absent one of the control devices previously functioning as a slave control device is determined as the master control device, which specifies the synchronisation clock pulse, wherein the other control devices (3, 4), determined by parameterisation as a slave control device, which receive the mentioned synchronisation clock pulse, determine a clock pulse difference between the provided synchronisation clock pulse and the individual, internal control clock pulse and accelerate and/or slow the individual, internal control clock pulse depending on the determined clock pulse difference, as a result of which the mentioned individual, internal control clock pulse is adjusted to the provided synchronisation clock pulse, **characterised in that** the respective individual, internal control clock pulse of at least one of the control devices (3, 4) determined by parameterisation as a slave control device is furthermore accelerated and/or slowed by a clock pulse control device (8) implemented in the mentioned at least one control device (3, 4) in such a way that the individual, internal control clock pulse of the mentioned at least one control device (3, 4) assumes an intentional predetermined shift with respect to the received synchronisation clock pulse.

3. Method according to either of the two preceding claims, wherein the respective individual, internal control clock pulse of at least one control device (3, 4) is accelerated and/or slowed by a clock pulse control device (8) implemented in the mentioned control device (3, 4) in such a way that the determined clock pulse difference from the received synchronisation clock pulse approaches zero.

4. Method according to any of the preceding claims, wherein the determination of the clock pulse difference and the mentioned acceleration and/or slowing of the control clock pulse takes place in at least one time window immediately after starting the control devices (2, 3, 4).

5. Method according to any of the preceding claims, wherein the mentioned determination of the clock pulse difference and the mentioned acceleration and/or slowing of the individual, internal control clock pulse is performed multiple times, cyclically or continuously, by the control devices (3, 4).

6. Control system comprising a plurality of control devices (2, 3, 4) which each generate and output clocked control signals following an individual, internal control clock pulse, wherein the control devices (2, 3, 4) are configured to be parameterisable and are interconnected by a connection line (5), wherein one of the control devices (2) is configured, by parameterisation, to function as a master control device and to provide a synchronisation clock pulse to the other control devices (3, 4), wherein the other control devices (3, 4) are configured, by parameterisation, to function as slave control devices, wherein if the synchronisation clock pulse is absent one of the control devices previously functioning as a slave control device is configured to function as the master control device and to provide the synchronisation clock pulse, wherein a clock pulse difference determination means (6) for determining a clock pulse difference between the received synchronisation clock pulse and the individual, internal control clock pulse, and a clock pulse control device (8) for accelerating and/or slowing the individual, internal control clock pulse depending on the determined clock pulse difference and adjusting the individual, internal control clock pulse to the received synchronisation clock pulse are provided at least on the other control devices (3, 4) that receive the synchronisation clock pulse, **characterised in that** the clock pulse control device (8) of at least one control device (3, 4) configured, by parameterisation, as a slave control device is configured for accelerating and/or slowing the individual, internal control clock pulse of the control device (3, 4) in such a way that the determined clock pulse difference assumes an intentional predetermined value different from 0.

7. Control system comprising a plurality of control devices (2, 3, 4) which each generate and output clocked control signals following an individual, internal control clock pulse, wherein the control devices (2, 3, 4) are configured to be parameterisable and are interconnected by a connection line (5), wherein one of the control devices (2) is configured, by parameterisation, to function as a master control device and to provide a synchronisation clock pulse to the other control devices (3, 4), wherein the other control devices (3, 4) are configured, by parameterisation, to function as slave control devices, wherein if the synchronisation clock pulse is absent one of the control devices previously functioning as a slave control device is configured to function as the master control device and to provide the synchronisation clock pulse, wherein a clock pulse difference determination means (6) for determining a clock pulse difference between the received synchronisation clock pulse and the individual, internal control clock pulse, and a clock pulse control device (8) for accelerating and/or slowing the individual, internal control clock pulse depending on the determined clock pulse difference and adjusting the individual, internal control clock pulse to the received synchronisation clock pulse are provided at least on the other control devices (3, 4) that receive the synchronisation clock pulse, **characterised in that** the clock pulse control device (8) of at least one control device (3, 4) configured, by parameterisation, as a slave control device is configured for accelerating and/or slowing the individual, internal control clock pulse of the control device (3, 4) in such a way that the individual, internal control clock pulse of the mentioned at least one control device (3, 4) assumes an intentional predetermined shift with respect to the received synchronisation clock pulse.

8. Control system comprising a plurality of control devices according to either of the two preceding claims, wherein the control devices (2, 3, 4) comprise a determination means for determining the absence of the synchronisation clock pulse signal, and a reconfiguration module for reconfiguring a slave control device into the master control device in the absence of the synchronisation clock pulse signal.

9. Control system comprising a plurality of control devices according to any of claims 6 to 8, wherein the clock pulse control device (8) of at least one control device (3, 4) is configured to accelerate and/or slow the individual, internal control clock pulse of the control device (3, 4) such that the determined clock pulse difference becomes zero or approaches zero.

10. Control system comprising a plurality of control devices according to any of claims 6 to 9, wherein the clock pulse difference determination means (6) and the clock pulse control device (8) of at least one control device (3, 4) are configured to perform the determination of the clock pulse difference from the synchronisation clock pulse and the acceleration and/or slowing of the individual, internal control clock pulse in at least one time window immediately after starting the control device (3, 4), preferably cyclically multiple times or continuously.

## Revendications

1. Procédé pour synchroniser des dispositifs de commande (2, 3, 4) qui génèrent et émettent chacun des signaux de commande cadencés selon une cadence de régulation interne propre, où les dispositifs de commande (2, 3, 4) sont reliés entre eux par une ligne de liaison (5) pour transmettre un signal de cadence de synchronisation, où l'un des dispositifs de commande (2) est déterminé de manière sélective par paramétrage comme dispositif de commande maître, à partir duquel la cadence de synchronisation est fournie aux autres dispositifs de commande (3, 4), où les autres dispositifs de commande (3, 4) sont déterminés par paramétrage comme dispositifs de commande esclaves, où, en l'absence de la cadence de synchronisation, l'un des dispositifs de commande fonctionnant auparavant comme dispositif de commande esclave est déterminé comme dispositif de commande maître à partir duquel la cadence de synchronisation est prédéfinie, où à partir des autres dispositifs de commande (3, 4) déterminés par paramétrage comme dispositif de commande esclave, qui reçoivent ladite cadence de synchronisation, une différence de cadence est déterminée entre la cadence de synchronisation fournie et la cadence de régulation interne propre, et en fonction de la différence de cadence déterminée, la cadence de régulation interne propre est accélérée et/ou ralentie, ce qui permet d'adapter ladite cadence de régulation interne propre à la cadence de synchronisation fournie ; **caractérisé en ce que** la cadence de régulation interne propre respective d'au moins l'un des dispositifs de commande (3, 4) déterminés par paramétrage comme dispositif de commande esclave est en outre accélérée et/ou ralentie par un dispositif de commande de cadence (8) implémenté dans ledit au moins un dispositif de commande (3, 4) de telle sorte que la différence de cadence déterminée par rapport à la cadence de synchronisation reçue prenne une valeur prédéterminée délibérée différente de zéro.

2. Procédé pour synchroniser des dispositifs de commande (2, 3, 4) qui génèrent et émettent chacun des signaux de commande cadencés selon une cadence de régulation interne propre, où les dispositifs de commande (2, 3, 4) sont reliés entre eux par une ligne de liaison (5) pour transmettre un signal de cadence de synchronisation, où l'un des dispositifs de commande (2) est déterminé de manière sélective par paramétrage comme dispositif de commande maître, à partir duquel la cadence de synchronisation est fournie aux autres dispositifs de commande (3, 4), où les autres dispositifs de commande (3, 4) sont déterminés par paramétrage comme dispositifs de commande esclaves, où, en l'absence de la cadence de synchronisation, l'un des dispositifs de commande fonctionnant auparavant comme dispositif de commande esclave est déterminé comme dispositif de commande maître à partir duquel la cadence de synchronisation est prédéfinie, où à partir des autres dispositifs de commande (3, 4) déterminés par paramétrage comme dispositif de commande esclave, qui reçoivent ladite cadence de synchronisation, une différence de cadence est déterminée entre la cadence de synchronisation fournie et la cadence de régulation interne propre, et en fonction de la différence de cadence déterminée, la cadence de régulation interne propre est accélérée et/ou ralentie, ce qui permet d'adapter ladite cadence de régulation interne propre à la cadence de synchronisation fournie ; **caractérisé en ce que** la cadence de régulation interne propre respective d'au moins l'un des dispositifs de commande (3, 4) déterminés par paramétrage comme dispositif de commande esclave est en outre accélérée et/ou ralentie par un dispositif de commande de cadence (8) implémenté dans ledit au moins un dispositif de commande (3, 4) de telle sorte que la cadence de régulation interne propre dudit au moins un dispositif de commande (3, 4) prenne un décalage prédéterminé délibéré par rapport à la cadence de synchronisation reçue.

3. Procédé selon l'une quelconque des deux revendications précédentes, où la cadence de régulation interne propre d'au moins un dispositif de commande (3, 4) est accélérée et/ou ralentie par un dispositif de commande de cadence (8) implémenté dans ledit dispositif de commande (3, 4) de telle sorte que la différence de cadence déterminée par rapport à la cadence de synchronisation reçue tende vers zéro.

4. Procédé selon l'une quelconque des revendications précédentes, où la détermination de la différence de cadence et ladite accélération et/ou ledit ralentissement de la cadence de régulation sont effectués dans au moins une fenêtre temporelle immédiatement après le démarrage des dispositifs de commande (2, 3, 4).

5. Procédé selon l'une quelconque des revendications précédentes, où ladite détermination de la différence de cadence et ladite accélération et/ou ledit ralentissement de la cadence de régulation interne propre sont effectués de manière cyclique à plusieurs reprises ou de manière continue par les dispositifs de commande (3, 4).

6. Système de commande comprenant plusieurs dispositifs de commande (2, 3, 4) qui génèrent et émettent chacun des signaux de commande cadencés selon une cadence de régulation interne propre, où les dispositifs de commande (2, 3, 4) sont réalisés sous forme paramétrable et reliés entre eux par une ligne de liaison (5), où l'un des dispositifs de commande (2) est configuré par paramétrage pour fonctionner comme dispositif de commande maître et fournir une cadence de synchronisation aux autres dispositifs de commande (3, 4), où les autres dispositifs de commande (3, 4) sont configurés par paramétrage pour fonctionner comme dispositifs de commande esclaves, où l'un des dispositifs de commande fonctionnant auparavant comme dispositif de commande esclave est configuré pour fonctionner comme dispositif de commande maître en l'absence de la cadence de synchronisation et pour fournir la cadence de synchronisation, où il est prévu, au moins sur les autres dispositifs de commande (3, 4) recevant la cadence de synchronisation, un appareil de détermination de différence de cadence (6) pour déterminer une différence de cadence entre la cadence de synchronisation reçue et la cadence de régulation interne propre, ainsi qu'un dispositif de commande de cadence (8) pour accélérer et/ou ralentir la cadence de régulation interne propre en fonction de la différence de cadence déterminée et pour adapter la cadence de régulation interne propre à la cadence de synchronisation reçue ; **caractérisé en ce que** le dispositif de commande de cadence (8) d'au moins un dispositif de commande (3, 4) déterminé par paramétrage comme dispositif de commande esclave (3, 4) est réalisé pour accélérer et/ou ralentir la cadence de régulation interne propre du dispositif de commande (3, 4) de telle sorte que la différence de cadence déterminée prenne une valeur prédéterminée délibérée différente de 0.

7. Système de commande comprenant plusieurs dispositifs de commande (2, 3, 4) qui génèrent et émettent chacun des signaux de commande synchronisés selon une cadence de régulation interne propre, où les dispositifs de commande (2, 3, 4) sont réalisés sous forme paramétrable et reliés entre eux par une ligne de liaison (5), où l'un des dispositifs de commande (2) est configuré par paramétrage pour fonctionner comme dispositif de commande maître et fournir une cadence de synchronisation aux autres dispositifs de commande (3, 4), où les autres dispositifs de commande (3, 4) sont configurés par paramétrage pour fonctionner comme dispositifs de commande esclaves, où l'un des dispositifs de commande fonctionnant auparavant comme dispositif de commande esclave est configuré pour fonctionner comme dispositif de commande maître en l'absence de la cadence de synchronisation et pour fournir la cadence de synchronisation, où il est prévu, au moins sur les autres dispositifs de commande (3, 4) recevant la cadence de synchronisation, un appareil de détermination de différence de cadence (6) pour déterminer une différence de cadence entre la cadence de synchronisation reçue et la cadence de régulation interne propre, ainsi qu'un dispositif de commande de cadence (8) pour accélérer et/ou ralentir la cadence de régulation interne propre en fonction de la différence de cadence déterminée et adapter la cadence de régulation interne propre à la cadence de synchronisation reçue ; **caractérisé en ce que** le dispositif de commande de cadence (8) d'au moins un dispositif de commande (3, 4) déterminé par paramétrage comme dispositif de commande esclave (3, 4) est réalisé pour accélérer et/ou ralentir la cadence de régulation interne propre du dispositif de commande (3, 4) de telle sorte que la cadence de régulation interne propre dudit au moins un dispositif de commande (3, 4) prenne un décalage prédéterminé délibéré par rapport à la cadence de synchronisation reçue.

8. Système de commande comprenant plusieurs dispositifs de commande selon l'une quelconque des deux revendications précédentes, où les dispositifs de commande (2, 3, 4) présentent un appareil de détermination pour déterminer l'absence du signal de cadence de synchronisation ainsi qu'un module de reconfiguration pour reconfigurer un dispositif de commande esclave en dispositif de commande maître en l'absence du signal de cadence de synchronisation.

9. Système de commande comprenant plusieurs dispositifs de commande selon l'une quelconque des revendications 6 à 8, où le dispositif de commande de cadence (8) d'au moins un dispositif de commande (3, 4) est réalisé pour accélérer et/ou ralentir la cadence de régulation interne propre du dispositif de commande (3, 4) de telle sorte que la différence de cadence déterminée devienne nulle ou tende vers zéro.

10. Système de commande comprenant plusieurs dispositifs de commande selon l'une quelconque des revendications 6 à 9, où l'appareil de détermination de différence de cadence (6) et le dispositif de commande de cadence (8) d'au moins un dispositif de commande (3, 4) sont réalisés pour effectuer la détermination de la différence de cadence par rapport à la cadence de synchronisation et l'accélération et/ou le ralentissement de la cadence de régulation interne propre dans au moins une fenêtre temporelle immédiatement après le démarrage du dispositif de commande (3, 4), de préférence de manière cyclique à plusieurs reprises ou de manière continue.
